(19) **Europäisches Patentamt / European Patent Office / Office européen des brevets**

(11) **EP 4 411 541 B1**

(12) ## EUROPEAN PATENT SPECIFICATION

(45) Date of publication and mention
of the grant of the patent:
**17.12.2025   Bulletin 2025/51**

(21) Application number: **23154382.8**

(22) Date of filing: **01.02.2023**

(51) International Patent Classification (IPC):
**G06F 9/48** *(2006.01)*

(52) Cooperative Patent Classification (CPC):
**G06F 9/4887**

(54) **COMPUTER-IMPLEMENTED TASK SCHEDULING METHOD**

COMPUTERIMPLEMENTIERTES AUFGABENPLANUNGSVERFAHREN

PROCÉDÉ DE PLANIFICATION DE TÂCHES MIS EN UVRE PAR ORDINATEUR

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**07.08.2024   Bulletin 2024/32**

(73) Proprietor: **Airbus S.A.S.**
**31700 Blagnac (FR)**

(72) Inventor: **Klügel, Markus**
**82024 Taufkirchen (DE)**

(74) Representative: **OTN Airbus SAS**
**Airbus Defence and Space GmbH
Willy-Messerschmitt-Straße 1
82024 Taufkirchen (DE)**

(56) References cited:
**US-A1- 2018 095 751**

• **HUANG ZHE ET AL: "RUSH: A RobUst ScHeduler
to Manage Uncertain Completion-Times in
Shared Clouds", PROCEEDINGS OF THE
INTERNATIONAL CONFERENCE ON
DISTRIBUTED COMPUTING SYSTEMS, IEEE
COMPUTER SOCIETY, US, 27 June 2016
(2016-06-27), pages 242 - 251, XP032939893,
ISSN: 1063-6927, [retrieved on 20160808], DOI:
10.1109/ICDCS.2016.95**

**Description**

The invention relates to a computer-implemented task scheduling method. The invention further relates to a task scheduling device, a data processing device, an air vehicle, a computer program, and a computer-readable data carrier.

A computer may have a set of different computing units, i.e., central processing units (CPUs), field-programmable gate arrays (FPGAs) or integrated circuits (ICs), or a combination of the aforementioned, that all can realize, for example, the same cryptographic functions, e.g., signing a piece of data, verifying a signature or secure key exchange. In certain situations, the computer may receive a high number of requests to execute such functions.

Multicore processing considers the task of distributing computational tasks on multiple cores. The key questions here are when and on which core to start a computing thread, task or subtask, such that a specific utility (e.g., the overall computation time, energy) is optimized. Hardware acceleration deals with the design of specialized hardware that realizes a sub-function required to execute a specific task. The goals here are to identify the functions that would benefit most from hardware acceleration and to implement and integrate them efficiently into the overall computing architecture.

It is knowm from patent publication US2018 095571 a multicore processor in which the requirements of the tasks to be executed are matched with the capabilities of the computing units so that the energy consumption is minimized.

The object of the invention is to provide an improved task scheduling method, in particular for a heterogeneous computational environment with different computing units.

To achieve this object, the invention provides a computer-implemented task scheduling method according to claim 1. A task scheduling device, a data processing device, an air vehicle, a computer program, and a computer-readable data carrier are subject-matter of the parallel claim.

Advantageous embodiments of the invention are subject-matter of the dependent claims.

In one aspect, the invention provides a computer-implemented task scheduling method for use in a data processing device with a plurality of computational hardware components and for scheduling a set $R[t]$ of computational tasks at a given time $t \in T_{act}$, $T_{act}$ being a set of discrete time intervals each of length $\Delta t$, among a set $A[t]$ of said computational hardware components that are available at the given time $t \in T_{act}$ and configured for executing any one of the computational tasks, each computational task being associated with a corresponding task quality class $c \in C$, $C$ being a set of task quality classes, each task quality class $c \in C$ and each computational hardware component being associated with a corresponding processing time value $T_{proc}$ in terms of $\Delta t$, the associated processing time value $T_{proc}$ being indicative of a duration for processing any one computational task of the corresponding class $c \in C$ by means of the corresponding computational hardware component, each task quality class $c \in C$ and each computational hardware component being further associated with a corresponding utility value $U_{proc}$, the associated utility value $U_{proc}$ being indicative of a cost or added value that is induced by processing any one computational task of the corresponding class $c \in C$ by means of the corresponding computational hardware component, the method comprising:

a) associating each task quality class $c \in C$ with a corresponding computing time limit value $D_{limit}$ in terms of $\Delta t$;
b) at the given time $t \in T_{act}$, defining for each computational task $r \in R[t]$ and each hardware component $a \in A[t]$, a corresponding decision variable $x_{ra}[t] \in \{0, 1\}$, wherein $x_{ra} = 1$, if said computational task $r \in R[t]$ is allocated to computational hardware component $a \in A[t]$, and $x_{ra} = 0$ otherwise, under the constraint that each task $r \in R[t]$ is allocatable to at most one computational hardware component $a \in A[t]$ and each computational hardware component $a \in A[t]$ is to assigned at most one computational task $r \in R[t]$;
c) at the given time $t \in T_{act}$, whereas $c_r \in C$ being the associated task quality class $c$ of $r \in R[t]$, determining decision variable data $x[t]$ by solving a maximization problem including the associated utility value $U_{proc}$ of $c_r \in C$ and $a \in A[t]$, for all $r \in R[t]$ and $a \in A[t]$, under the condition:

$$\sum_{a \in A[t]} x_{ra}[t] T_{c_r a} + \left(1 - \sum_{a \in A[t]} x_{ra}[t]\right)(D_{c_r} + 1) \leq D_{c_r}, \text{ for all } r \in R[t],$$

with $x[t] \in F[t]$, $F[t]$ being the set of all decision variable data satisfying the constraint in step b) at the given time $t \in T_{act}$, $T_{c_r a}$ being the associated processing time $T_{proc}$ of $c_r \in C$ and $a \in A[t]$, and $D_{c_r}$ being the associated computing time limit value $D_{limit}$ of $c_r \in C$; and
d) at the given time $t \in T_{act}$, scheduling the set $R[t]$ of computational tasks among the set $A[t]$ of computational hardware components based on the determined decision variable data $x[t]$.

Preferably, step c) further comprises:
c1) at the given time $t \in T_{act}$, solving the maximization problem according to:

$$\max_{x[t]} \sum_{r \in R[t]} \sum_{a \in A[t]} x_{ra}[t] U_{c_r a},$$

with $U_{c_r a}$ being the associated utility value $U_{proc}$ of $c_r \in C$ and $a \in A[t]$.

Preferably, step c) further comprises:

c2) at the given time $t \in T_{act}$, solving a bipartite matching problem as maximization problem.

Preferably, step c) further comprises:

c3) at the given time $t \in T_{act}$, solving the bipartite matching problem according to:

$$\max_{x[t]} \sum_{r \in R[t]} \sum_{a \in A[t]} x_{ra}[t] \left( U_{c_r a} - V_{c_r}[t][T_{c_r a} - D_{c_r} - 1] \right),$$

with $U_{c_r a}$ being the associated utility value $U_{proc}$ of $c_r \in C$ and $a \in A[t]$, $T_{c_r a}$ being the associated processing time $T_{proc}$ of $c_r \in C$ and $a \in A[t]$, $D_{c_r}$ being the associated computing time limit value $D_{limit}$ of $c_r \in C$, and $V_{c_r}[t]$ being a virtual queue variable of $c_r \in C$ in terms of per $\Delta t$.

Preferably, step c) further comprises:

c4) at the given time $t \in T_{act}$, iteratively computing for each class $c_r \in C$ the associated virtual queue variable $V_{c_r}[t]$ in terms of per $\Delta t$ according to:

$$V_{c_r}[t] = \max_{x[t]} \left\{ V_{c_r}[t - \Delta t] \right.$$

$$\left. - \lambda \left( D_{c_r} - \sum_{a \in A[t]} x_{ra}[t - \Delta t] T_{c_r a} - \left( 1 - \sum_{a \in A[t]} x_{ra} \right)(D_{c_r} + 1) \right), 0 \right\},$$

wherein $\lambda \geq 0$ corresponds to a tuning parameter of the iteration.

Preferably, the associated computing time limit value $D_{limit}$ corresponds to an average duration for processing any one computational task of the corresponding class $c \in C$ by means of each of the computational hardware components in the data processing device.

Preferably, the associated utility value $U_{proc}$ corresponds to an associated priority value $P_{proc}$ indicative of a priority that has every computational task of the corresponding class $c \in C$ on the corresponding computational hardware component.

Preferably, the associated utility value $U_{proc}$ corresponds to an associated priority value $P_{proc}$ indicative of a priority that has every computational task of the corresponding class $c \in C$ on each of the computational hardware components in the data processing device.

Preferably, each computational task includes a cryptographic computation function.

In another aspect, the invention provides a task scheduling device comprising means for carrying out the method of any of the preceding embodiments.

In another aspect, the invention provides a data processing device, comprising the task scheduling device and a plurality of computational hardware components.

Preferably, the plurality of computational hardware components include one or more of a CPU, a GPU, a FPGA, an IC, and/or the like.

Preferably, at least two of the plurality of computational hardware components have for at least one task quality class $c \in C$ differing corresponding processing time values $T_{proc}$ and/or differing corresponding processing time values $U_{proc}$.

In another aspect, the invention provides an air vehicle, in particular an aircraft, comprising the task scheduling device and/or the data processing device.

In another aspect, the invention provides a computer program comprising instructions which, when the program is executed by a computer, cause the computer to carry out the method of any of the preceding embodiments.

In another aspect, the invention provides a computer-readable data carrier having stored thereon the computer program.

Embodiments of the invention preferably have the following advantages and effects:
Compared to traditional multicore processors, hardware accelerators (FPGAs or ICs) can have several advantages: they can significantly improve performance and energy consumption for specific tasks. They have the potential to implement a pipelining structure, which allows a higher task throughput. Also, they can provide a trusted implementation of a cryptographic routine, as they are not corrupted as easily as software. On the other hand, data transfer to accelerators often forms a bottleneck that may slow down their use, neglecting or even countering the benefit of hardware implementation. An advantage of preferred embodiments of the invention is to make use of the available computing power by taking into account the properties of the different implementation options of CPU, FPGA and IC. By assigning the tasks to the correct piece of hardware at the correct point in time, the overall task throughput and/or energy consumption can be reduced.

Preferred embodiments of the invention may comprise a computational block that interacts with all associated CPUs, FPGAs and ICs to identify their computation status, a decision routine to decide on which device the next task will be executed, and an interface to transfer the task to the related piece of hardware.

Preferred embodiments of the invention may be considered in a task scheduler for cryptographic functions. Preferred embodiments can be used in the field of "post-quantum" (i.e., quantum safe) cryptography, but can as well be extended to classical cryptography. As such, preferred embodiments of the invention may be related to the field of hardware-software codesign, hardware acceleration and multi-core computing, but in the field of cryptography. Preferably, embodiments of the invention are applicable to any product that has a hardware acceleration for cryptographic functions. Preferred embodiments of the invention target cryptographic functions in the electronic bay of an aircraft or in the cloud of a ground station counterpart. They could be implemented, e.g., in an aircraft data platform.

Embodiments of the invention are now explained in more detail with reference to the accompanying drawings of which

Fig. 1    shows an embodiment of a data processing device;

Fig. 2    shows an embodiment of a computer-implemented task scheduling method;

Fig. 3    shows an embodiment of an aeronautic system;

Fig. 4    shows a server of the system of Fig. 3,

Fig. 5    shows a process of symmetric key exchange;

Fig. 6    shows a process of signature generation and verification;

Fig. 7    shows a process with a task scheduling device; and

Fig. 8    shows another process with the task scheduling device.

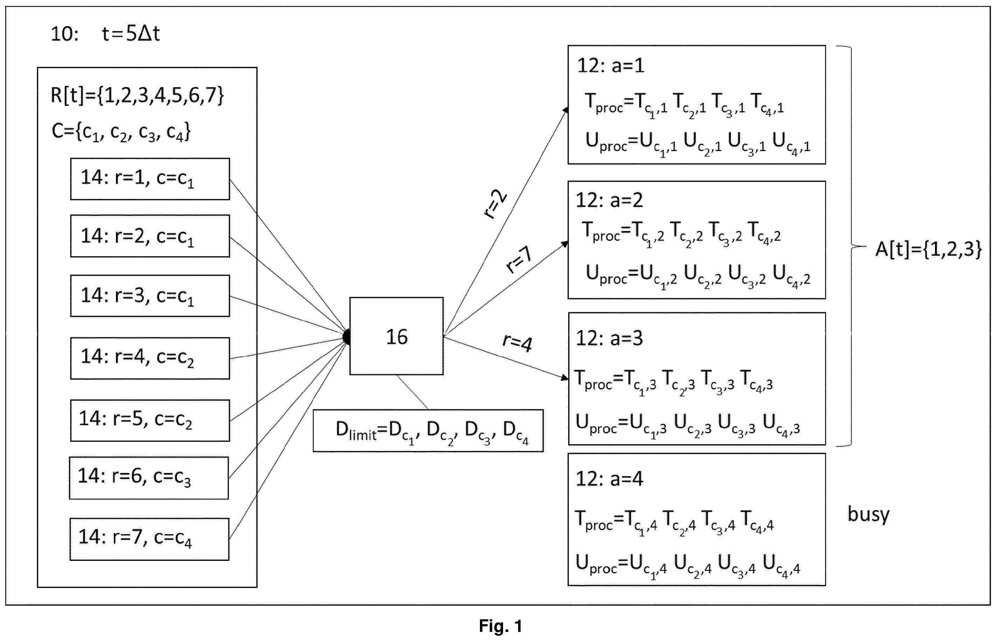

Fig. 1 shows an embodiment of a data processing device 10.

The data processing device 10 includes a plurality of computational hardware components 12. The computational hardware components 12 are processing units and may include one or more of a central processing unit 28 (CPU), a graphics processing unit (GPU), a field-programmable gate array 30 (FPGA), an integrated circuit 32 (IC), and/or any other kind of processing unit.

Each computational hardware component 12 is configured for executing a computational task 14. The computational task 14 can include, for example, a cryptographic computation function.

Each computational tasks 14 can be assigned a task quality class $c \in C$, $C$ being a set of task quality classes. Each task quality class $c \in C$ and each computational hardware component 12 is associated with a corresponding processing time value $T_{proc}$ in terms of a discrete time interval of length $\Delta t$. The associated processing time value $T_{proc}$ is indicative of a duration for processing any one computational task 14 of the corresponding class $c \in C$ by means of the corresponding computational hardware component 12.

Each task quality class $c \in C$ and each computational hardware component 12 is further associated with a corresponding utility value $U_{proc}$. The associated utility value $U_{proc}$ may be indicative of a cost or added value that is induced by processing any one computational task 14 of the corresponding class $c \in C$ by means of the corresponding computational hardware component 12. For example, $U_{proc} = -E$ may indicate that assigning any one computational task 14 of the corresponding class $c \in C$ to the corresponding computational hardware component 12 induces an energy cost of $E > 0$. Likewise, a value $U_{proc} = 1$ may indicate that assigning any one computational task 14 of the corresponding class $c \in C$ to the corresponding computational hardware component 12 adds a value of finishing off one computational task 14.

Alternatively or additionally, the associated utility value $U_{proc}$ may correspond to an associated priority value $P_{proc}$ indicative of a priority that has every computational task 14 of the corresponding class $c \in C$ on the corresponding computational hardware component 12.

Alternatively or additionally, the associated utility value $U_{proc}$ may correspond to an associated priority value $P_{proc}$ indicative of a priority that has every computational task 14 of the corresponding class $c \in C$ on each of the computational hardware components 12 in the data processing device 10.

In the present example, the data processing device 10 is configured as a heterogeneous environment in the sense that the corresponding processing time value $T_{proc}$ for one computational task 14 of a given task quality class $c \in C$ may differ between the computational hardware components 12 and/or the corresponding utility value $U_{proc}$ for one computational task 14 of a given task quality class $c \in C$ may differ between the computational hardware components 12.

The data processing device 10 further includes a task scheduling device 16. The task scheduling device 16 is configured for scheduling a set $R[t]$ of computational tasks 14 at a given time $t \in T_{act}$, $T_{act}$ being a set of the discrete time intervals $\Delta t$, among a set $A[t]$ of said computational hardware components 12 each available at the given time $t \in T_{act}$. In Fig. 1, $t = 5\Delta t$ as example.

Since the associated processing time value $T_{proc}$ and/or the associated utility value $U_{proc}$ for a computational task $r \in R[t]$, with $c_r \in C$ being the associated task quality class $c$ of $r \in R[t]$, may differ between the available computational hardware components $a \in A[t]$, the question is how to schedule the set $R[t]$ of computational tasks 14 at the given time $t \in T_{act}$ among the set $A[t]$ of computational hardware components 12.

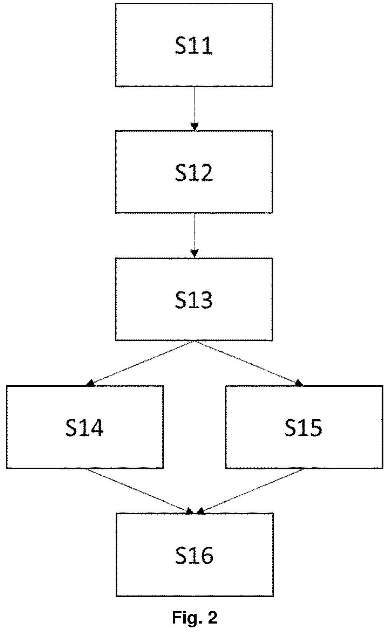

Fig. 2 shows an embodiment of a computer-implemented task scheduling method.

In a step S11, the method includes:

- Associating each task quality class $c \in C$ with a corresponding computing time limit value $D_{limit}$ in terms of $\Delta t$.

The corresponding computing time limit value $D_{limit}$ preferably is a positive number. $D_{limit}$ may correspond to an average duration for processing any one computational task 14 of the corresponding class $c \in C$ by means of each of the computational hardware components 12 in the data processing device 10. $D_{limit}$ may, for example, indicate that it is acceptable to process any one computational task 14 of the corresponding class $c \in C$ by means of a computational hardware component 12 when $T_{proc} \leq D_{limit}$. $D_{limit}$ can also be regarded as a target value which is set externally. A high value of $D_{limit}$ may allow to process more computational tasks 14 of different corresponding classes $c \in C$ by means of a given computational hardware component 12, whereas a low value $D_{limit}$ limits the computational tasks 14 which are allowed to be processed by a given computational hardware component 12, to less corresponding classes $c \in C$.

In a step S12, the method includes:

- At the given time $t \in T_{act}$, defining for each computational task $r \in R[t]$ and each hardware component $a \in A[t]$, a corresponding decision variable $x_{ra}[t] \in \{0, 1\}$, wherein $x_{ra} = 1$, if said computational task $r \in R[t]$ is allocated to computational hardware component $a \in A[t]$, and $x_{ra} = 0$ otherwise, under the constraint that each task $r \in R[t]$ is allocatable to at most one computational hardware component $a \in A[t]$ and each computational hardware component $a \in A[t]$ is to assigned at most one computational task $r \in R[t]$.

In a step S13, the method includes:

- At the given time $t \in T_{act}$, whereas $c_r \in C$ being the associated task quality class $c$ of $r \in R[t]$, determining decision variable data $x[t]$ by solving a maximization problem including the associated utility value $U_{proc}$ of $c_r \in C$ and $a \in A[t]$, for all $r \in R[t]$ and $a \in A[t]$, under the condition:

$$\sum_{a \in A[t]} x_{ra}[t] T_{c_r a} + \left(1 - \sum_{a \in A[t]} x_{ra}[t]\right)\left(D_{c_r} + 1\right) \leq D_{c_r}, \text{ for all } r \in R[t],$$

with $x[t] \in F[t]$, $F[t]$ being the set of all decision variable data satisfying the constraint in step S12 at the given time $t \in T_{act}$, $T_{c_r a}$ being the associated processing time $T_{proc}$ of $c_r \in C$ and $a \in A[t]$, and $D_{c_r}$ being the associated computing time limit value $D_{limit}$ of $c_r \in C$.

The trivial solution of $x_{ra}[t] = 0$ for all $a \in A[t]$ is excluded by contradiction $D_{c_r} + 1 \leq D_{c_r}$ for a given $r \in R[t]$. This guarantees that at least one computational task $r \in R[t]$ is allocated, even if each computational task $r \in R[t]$ induced a cost.

In a step S14, the method may include as a first possible solution:

- At the given time $t \in T_{act}$, solving the maximization problem according to:

$$\max_{x[t]} \sum_{r \in R[t]} \sum_{a \in A[t]} x_{ra}[t] U_{c_r a},$$

with $U_{c_r a}$ being the associated utility value $U_{proc}$ of $c_r \in C$ and $a \in A[t]$.

In a step S15, the method may include as a second possible solution:

- At the given time $t \in T_{act}$, solving the maximization problem according to:

$$\max_{x[t]} \sum_{r \in R[t]} \sum_{a \in A[t]} x_{ra}[t] \left( U_{c_r a} - V_{c_r}[t] \left[ T_{c_r a} - D_{c_r} - 1 \right] \right),$$

with $U_{c_r a}$ being the associated utility value $U_{proc}$ of $c_r \in C$ and $a \in A[t]$, $T_{c_r a}$ being the associated processing time $T_{proc}$ of $c_r \in C$ and $a \in A[t]$, $D_{c_r}$ being the associated computing time limit value $D_{limit}$ of $c_r \in C$, and $V_{c_r}[t]$ being a virtual queue variable of $c_r \in C$ in terms of per $\Delta t$.

In this form, the maximization problem represents a bipartite matching or assignment problem. The bipartite matching or assignment problem is a combinatorial optimization problem that may be solved, for example, by the Hungarian algorithm.

In step S15, $V_{c_r}[t]$ is iteratively computed for each class $c_r \in C$ according to:

$$V_{c_r}[t] = \max_{x[t]} \left\{ V_{c_r}[t - \Delta t] \right.$$

$$\left. - \lambda \left( D_{c_r} - \sum_{a \in A[t]} x_{ra}[t - \Delta t] T_{c_r a} - \left( 1 - \sum_{a \in A[t]} x_{ra} \right) \left( D_{c_r} + 1 \right) \right), 0 \right\},$$

wherein $\lambda \geq 0$ corresponds to a tuning parameter of the iteration. The virtual queue variable $V_{c_r}[t]$ is set to be a non-negative value. As a possible starting value $V_{c_r}[0] = 0$ may be selected.

In a step S16, the method includes:

- At the given time $t \in T_{act}$, scheduling the set $R[t]$ of computational tasks 14 among the set $A[t]$ of computational hardware components 12 based on the determined decision variable data $x[t]$.

The invention also comprises the task scheduling device 16 comprising means for carrying out the task scheduling method. The invention further comprises the data processing device 10, comprising such task scheduling device 16 and the plurality of computational hardware components 12. The invention further comprises an air vehicle, in particular an aircraft 18, comprising the task scheduling device 16 and/or the data processing device 10. The invention further comprises a computer program (not shown) comprising instructions which, when the program is executed by a computer, cause the computer to carry out the task scheduling method. The invention further comprises a computer-readable data carrier (not shown) having stored thereon the computer program.

Preferred embodiments of the invention can be summarized as follows:

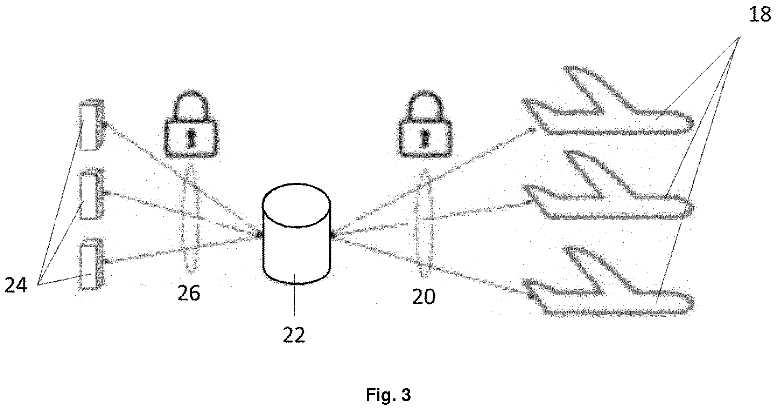

Communication links are becoming an integral part of aeronautic systems. An example that is implemented or envisioned in multiple contexts (commercial airspace as well as urban airspace) is the data upload to a cloud, as shown in Fig. 3. Here, multiple aircrafts 18, or in general air vehicles (AVs), upload telemetry or status updates 20 to a cloud server 22. On this server 22, data is processed and either fetched by end users 24 via an interaction 26 or re-distributed to the AVs. To avoid misuse, the communication links need to be secured cryptographically, to provide confidentiality, integrity and/or authentication. To do so, a public key infrastructure (PKI) based on asymmetric cryptography is often used. PKIs involve different procedures for key exchange and signature generation/verification. These procedures require the execution of computational tasks that may run on general purpose CPUs 28 or on specific hardware, such as FPGAs 30 or ICs 32. In some places, for example in the cloud 22, a high number of connections are established, which leads to a high number of times that the cryptographic functions need to be executed. To deal with this load efficiently, a multi-core and multi-accelerator setup is targeted.

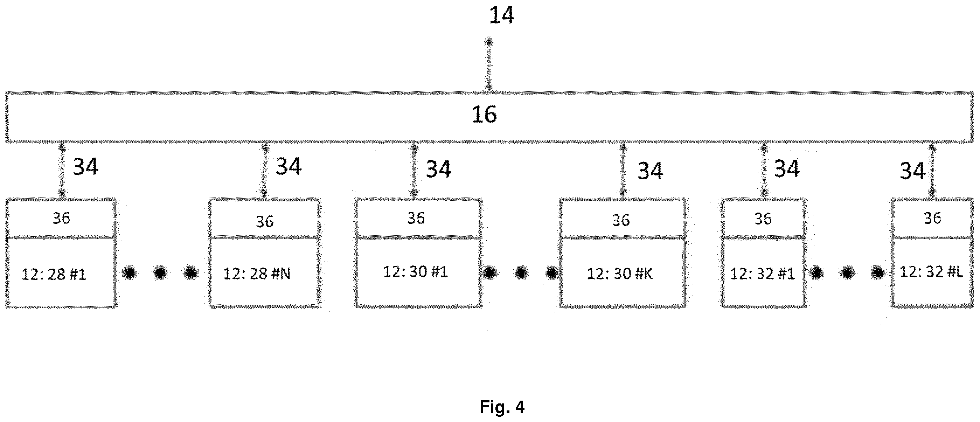

The targeted system comprises a set of hardware components 12 as shown in Fig. 4, namely one or multiple CPUs 28, one or multiple FPGAs 30 and/or one or multiple ICs 32. Each component 12 is reachable via a communication interface 34, e.g. a bus system, that can be used to transfer data and commands to it. Also, each component 12 has associated a piece of memory 36 to which it writes its output or status. The memory 36 may be either physically or logically associated with it. Finally, there is a scheduler 16, i.e., a control routine that distributes cryptographic tasks 14 to the different components 12.

It is assumed that each of the hardware components 12 has an implementation for a subset of the following cryptographic functions:

*keygen* - creates a pair of public and secret key,
*sign* - signs a specific piece of data,
*verify* - verifies the signature of a signed piece of data,
*encaps* - encapsulates a shared secret for a key exchange mechanism,
*decaps* - decapsulates a shared secret for a key exchange mechanism.

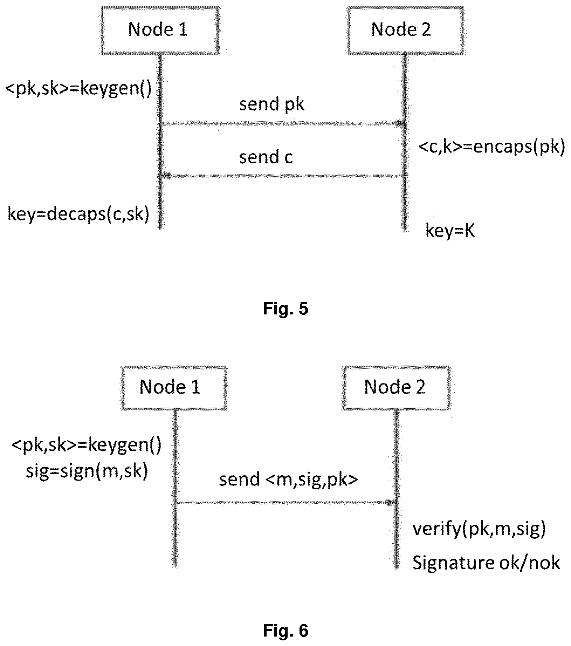

The functions can be combined to perform tasks 14 related to PKIs, e.g., symmetric key exchange, certificate generation and verification, etc. For example, the process of symmetric key exchange happens in the fashion shown in Fig. 5, while signature generation and verification happens as shown in Fig. 6, with pk being a public key, sk a secret key, m a message, sig a signature, and c a ciphertext in these figures.

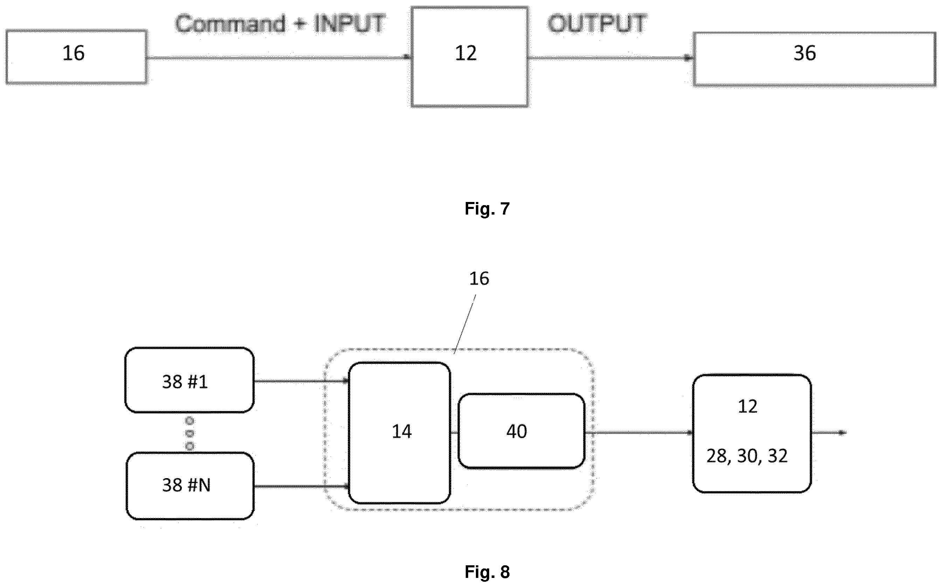

The scheduler 16 can interact with the hardware components 12, e.g., via a bus, and can issue the execution of different commands 14. The results are then fed back into the memory 36 associated with the component 12, as shown in Fig. 7.

Depending on the exact command, the INPUT and OUTPUT parts change:

| Command | INPUT | OUTPUT |
|---|---|---|
| keygen | -/- | Public Key Secret Key Return Code |
| encaps | Public Key | Ciphertext Shared Secret Return Code |
| decaps | Ciphertext Secret Key | Share Secret Return Code |
| sign | Message Secret Key | Signature Return Code |
| verify | Message Signature Public Key | Return Code |

Note that in particular realizations, additional parameters might be fed in or out, such as the length of the exchanged data fields. Also, in specific realizations, both input and output may contain an extra ID field that identifies the communication peer to which the command is associated.

When a thread 38 on the computer tries to execute a command, it passes the command 14 and input to the scheduler 16 as shown in Fig. 8. The scheduler 16 treats the command 14 and input as "request", that it holds in an internal data structure. All requests are processed in an order that is determined by an internal scheduling routine 40. The routine 40 decides which of the requests is passed to the cryptographic function next, and to which CPU 28, FPGA 30 or IC 32 exactly it is passed. For example, the scheduling routine 40 can implement a first-in first-out queue, a priority queueing system or similar. Once a request has been processed by the cryptographic function, the output is fed back to the originating thread 38, which continues its intended operation.

Among all possible scheduling routines, two specific scheduling classes shall be mentioned in particular, namely strict priority scheduling and a utility optimizing scheduler with virtual queues.

Consider that time is grouped into discrete intervals $t \in \{1,2,3, ...\}$ and assume that at each interval, $A[t] =$

{1,2,3, ...} is the set of available function instances (the FPGAs, ICs or CPUs that would accept a command) and $R[t]$ = {1,2,3, ... } is the set of pending requests (the pending commands). Each request is part of a quality class $c_r \in C$. For each request $r \in R[t]$ and instance $a \in A[t]$, the time required to transfer the associated command and data, execute the function and return the output is given by $T_{ra}$. Each class and instance has associated a utility value $U_{ca}$ that determines either the "cost" or "added value" that is induced by assigning a task of class $c$ to it. For example, $U_{ca} := -E_{ca}$ would indicate that assigning a task of class $c$ to instance $a$ induces an energy cost of $E_{ca}$. Likewise, a value $U_{ca} := 1$ would induce that assigning a task of class $c$ to instance $a$ adds the value of finishing off one task. At each time instance $t$, there is a decision variable $x_{ra} \in \{0,1\}$, which is one if request $r$ is allocated to instance $a$ and zero otherwise. To be valid, the decision vector $x$ must satisfy a set of constraints, namely that each request can be assigned to at most one function instance and that each function instance cannot have more than one request assigned. For the sake of brevity, these constraints are written as $x \in F$, where $F$ is the set of valid ("feasible") allocations. The two schedulers then work in the following manner:

1) **Strict priority scheduler:** Here, the utility is a strict priority value per class, i.e., $U_{ca} = P_c \; \forall a$, and the goal is to optimize the mathematical problem $\max\limits_{x} \sum_{r \in R[t]} \sum_{a \in A[t]} x_{ra} P_{c_r}$ s.t. $x \in F$, which is solved by sequentially assigning the requests with highest priority first to their function of choice, then the ones with the second highest priority to the remaining ones, and so forth.

2) **Virtual Queue scheduler:** Here, the goal is to maximize the long-term average of the problem

$$\max\limits_{x} \sum_{r \in R[t]} \sum_{a \in A[t]} x_{ra} U_{c_r a} \quad \text{s.t.}$$

$$\sum_{a \in A[t]} x_{ra} T_{c_r a} + \left(1 - \sum_{a \in A[t]} x_{ra}\right)\left(D_{c_r} + 1\right) \leq D_{c_r} \; \forall r, x \in F.$$

This is done by associating a virtual queue variable $V_c$ per class. After each allocation, the queue variables are updated by $V_{c_r} := \max\{V_{c_r} - \lambda(D_{c_r} - \Sigma_{a \in A[t]} x_{ra} T_{c_r a} - (1 - \Sigma_{a \in A[t]} x_{ra})(D_{c_r} + 1)), 0\}$, for a given $\lambda \geq 0$ that may be used to fine-tune the scheduler. In each time instant, the scheduler then solves the problem

$$\max\limits_{x} \sum_{r \in R[t]} \sum_{a \in A[t]} x_{ra} \left(U_{c_r a} - V_{c_r}\left[T_{c_r a} - D_{c_r} - 1\right]\right)$$

s.t. $x \in F$. This problem is a bipartite matching problem that may be solved with known methods, e.g., with the Hungarian method.

**List of reference signs:**

| | |
|----|----|
| 10 | data processing device |
| 12 | computational hardware component |
| 14 | computational task |
| 16 | task scheduling device |
| 18 | aircraft |
| 20 | telemetry or status update |
| 22 | server |
| 24 | end user |
| 26 | interaction |
| 28 | CPU |
| 30 | FPGA |
| 32 | IC |
| 34 | interface |
| 36 | memory |
| 38 | thread |
| 40 | routine |

| | |
|----|----|
| $t$ | given time |
| $R[t]$ | set of computational tasks |
| $A[t]$ | set of computational hardware components |
| $T_{act}$ | set of discrete time intervals each of length $\Delta t$ |

| | |
|---|---|
| $C$ | set of task quality classes |
| $T_{proc}$ | processing time value |
| $U_{proc}$ | utility value |
| $D_{limit}$ | computing time limit |
| $x_{ra}$ | decision variable |
| $x$ | decision variable data |
| $V_c$ | virtual queue variable |
| $\lambda$ | tuning parameter |
| $P_{proc}$ | priority value |

**Claims**

1. A computer-implemented task scheduling method for use in a data processing device (10) with a plurality of computational hardware components (12) and for scheduling a set $R[t]$ of computational tasks (14) at a given time $t \in T_{act}$, $T_{act}$ being a set of discrete time intervals each of length $\Delta t$, among a set $A[t]$ of said computational hardware components (12) that are available at the given time $t \in T_{act}$ and configured for executing any one of the computational tasks (14), each computational task (14) being associated with a corresponding task quality class $c \in C$, $C$ being a set of task quality classes, each task quality class $c \in C$ and each computational hardware component (12) being associated with a corresponding processing time value $T_{proc}$ in terms of $\Delta t$, the associated processing time value $T_{proc}$ being indicative of a duration for processing any one computational task (14) of the corresponding class $c \in C$ by means of the corresponding computational hardware component (12), each task quality class $c \in C$ and each computational hardware component (12) being further associated with a corresponding utility value $U_{proc}$, the associated utility value $U_{proc}$ being indicative of a cost or added value that is induced by processing any one computational task (14) of the corresponding class $c \in C$ by means of the corresponding computational hardware component (12), the method comprising:

   a) associating each task quality class $c \in C$ with a corresponding computing time limit value $D_{limit}$ in terms of $\Delta t$;
   b) at the given time $t \in T_{act}$, defining for each computational task $r \in R[t]$ and each hardware component $a \in A[t]$, a corresponding decision variable $x_{ra}[t] \in \{0, 1\}$, wherein $x_{ra} = 1$, if said computational task $r \in R[t]$ is allocated to computational hardware component $a \in A[t]$, and $x_{ra} = 0$ otherwise, under the constraint that each task $r \in R[t]$ is allocatable to at most one computational hardware component $a \in A[t]$ and each computational hardware component $a \in A[t]$ is to assigned at most one computational task $r \in R[t]$;
   c) at the given time $t \in T_{act}$, whereas $c_r \in C$ being the associated task quality class $c$ of $r \in R[t]$, determining decision variable data $x[t]$ by solving a maximization problem including the associated utility value $U_{proc}$ of $c_r \in C$ and $a \in A[t]$, for all $r \in R[t]$ and $a \in A[t]$, under the condition:

   $$\sum_{a \in A[t]} x_{ra}[t] T_{c_r a} + \left(1 - \sum_{a \in A[t]} x_{ra}[t]\right)(D_{c_r} + 1) \leq D_{c_r}, \text{ for all } r \in R[t],$$

   with $x[t] \in F[t]$, $F[t]$ being the set of all decision variable data satisfying the constraint in step b) at the given time $t \in T_{act}$, $T_{c_r a}$ being the associated processing time $T_{proc}$ of $c_r \in C$ and $a \in A[t]$, and $D_{c_r}$ being the associated computing time limit value $D_{limit}$ of $c_r \in C$; and
   d) at the given time $t \in T_{act}$, scheduling the set $R[t]$ of computational tasks (14) among the set $A[t]$ of computational hardware components (12) based on the determined decision variable data $x[t]$.

2. The method according to claim 1, **characterized in that** step c) further comprises:
   c1) at the given time $t \in T_{act}$, solving the maximization problem according to:

   $$\max_{x[t]} \sum_{r \in R[t]} \sum_{a \in A[t]} x_{ra}[t] U_{c_r a},$$

   with $U_{c_r a}$ being the associated utility value $U_{proc}$ of $c_r \in C$ and $a \in A[t]$.

3. The method according to any of the preceding claims, **characterized in that** step c) further comprises:
   c2) at the given time $t \in T_{act}$, solving a bipartite matching problem.

4. The method according to claim 3, **characterized in that** step c) further comprises:

c3) at the given time $t \in T_{act}$, solving the bipartite matching problem according to:

$$\max_{x[t]} \sum_{r \in R[t]} \sum_{a \in A[t]} x_{ra}[t]\left(U_{c_r a} - V_{c_r}[t]\left[T_{c_r a} - D_{c_r} - 1\right]\right),$$

with $U_{c_r a}$ being the associated utility value $U_{proc}$ of $c_r \in C$ and $a \in A[t]$, $T_{c_r a}$ being the associated processing time $T_{proc}$ of $c_r \in C$ and $a \in A[t]$, $D_{c_r}$ being the associated computing time limit value $D_{limit}$ of $c_r \in C$, and $V_{c_r}[t]$ being a virtual queue variable of $c_r \in C$ in terms of per $\Delta t$.

5. The method according to claim 4, **characterized in that** step c) further comprises:
c4) at the given time $t \in T_{act}$, iteratively computing for each class $c_r \in C$ the associated virtual queue variable $V_{c_r}[t]$ in terms of per $\Delta t$ according to:

$$V_{c_r}[t] = \max_{x[t]}\left\{ V_{c_r}[t - \Delta t] \right.$$

$$\left. - \lambda\left(D_{c_r} - \sum_{a \in A[t]} x_{ra}[t - \Delta t]\, T_{c_r a} - \left(1 - \sum_{a \in A[t]} x_{ra}\right)(D_{c_r} + 1)\right), 0\right\},$$

wherein $\lambda \geq 0$ corresponds to a tuning parameter of the iteration.

6. The method according to any of the preceding claims, **characterized in that** the associated computing time limit value $D_{limit}$ corresponds to an average duration for processing any one computational task (14) of the corresponding class $c \in C$ by means of each of the computational hardware components (12) in the data processing device (10).

7. The method according to any of the preceding claims, **characterized in that** the associated utility value $U_{proc}$ corresponds to an associated priority value $P_{proc}$ indicative of a priority that has every computational task (14) of the corresponding class $c \in C$ on the corresponding computational hardware component (12) and/or in that the associated utility value $U_{proc}$ corresponds to an associated priority value $P_{proc}$ indicative of a priority that has every computational task (14) of the corresponding class $c \in C$ on each of the computational hardware components (12) in the data processing device (10).

8. The method according to any of the preceding claims, **characterized in that** each computational task (14) includes a cryptographic computation function.

9. A task scheduling device (16) comprising means configured to carry out the method of any of the preceding claims.

10. A data processing device (10), comprising the task scheduling device (16) of claim 9 and a plurality of computational hardware components (12).

11. The data processing device (10) of claim 10, **characterized in that** the plurality of computational hardware components include one or more of a CPU (28), a GPU, a FPGA (30), an IC (32), and/or the like.

12. The data processing device (10) of claim 11, **characterized in that** at least two of the plurality of computational hardware components (12) have for at least one task quality class $c \in C$ differing corresponding processing time values $T_{proc}$ and/or differing corresponding processing time values $U_{proc}$.

13. An air vehicle, in particular an aircraft (18), comprising the task scheduling device (16) of claim 9 and/or the data processing device (10) of claim 10 or 11.

14. A computer program comprising instructions which, when the program is executed by a computer, cause the computer to carry out the method of any of the claims 1 to 8.

**15.** A computer-readable data carrier having stored thereon the computer program of claim 14.

**Patentansprüche**

**1.** Computerimplementiertes Aufgabenplanungsverfahren zur Verwendung in einer Datenverarbeitungsvorrichtung (10) mit einer Vielzahl von Rechenhardwarekomponenten (12) und zum Planen eines Satzes $R[t]$ von Rechenaufgaben (14) zu einem gegebenen Zeitpunkt $t \in T_{act}$, wobei $T_{act}$ ein Satz von diskreten Zeitintervallen mit jeweils der Länge $\Delta t$ ist, unter einem Satz $A[t]$ der Rechenhardwarekomponenten (12), die zu dem gegebenen Zeitpunkt $t \in T_{act}$ verfügbar und zum Ausführen einer beliebigen der Rechenaufgaben (14) konfiguriert sind, wobei jede Rechenaufgabe (14) einer entsprechenden Aufgabenqualitätsklasse $c \in C$ zugeordnet ist, wobei C ein Satz von Aufgabenqualitätsklassen ist, wobei jede Aufgabenqualitätsklasse $c \in C$ und jede Rechenhardwarekomponente (12) einem entsprechenden Verarbeitungszeitwert $T_{proc}$ in Form von $\Delta t$ zugeordnet ist, wobei der zugeordnete Verarbeitungszeitwert $T_{proc}$ eine Dauer für die Verarbeitung einer beliebigen Rechenaufgabe (14) der entsprechenden Klasse $c \in C$ mittels der entsprechenden Rechenhardwarekomponente (12) angibt, wobei jede Aufgabenqualitätsklasse $c \in C$ und jede Rechenhardwarekomponente (12) ferner einem entsprechenden Nutzwert $U_{proc}$ zugeordnet ist, wobei der zugeordnete Nutzwert $U_{proc}$ Kosten oder einen Mehrwert angibt, die/der durch die Verarbeitung einer beliebigen Rechenaufgabe (14) der entsprechenden Klasse $c \in C$ mittels der entsprechenden Rechenhardwarekomponente (12) verursacht wird, wobei das Verfahren umfasst:

a) Zuordnen jeder Aufgabenqualitätsklasse $c \in C$ zu einem entsprechenden Rechenzeitgrenzwert $D_{limit}$ in Form von $\Delta t$;
b) zu dem gegebenen Zeitpunkt $t \in T_{act}$, Definieren, für jede Rechenaufgabe $r \in R[t]$ und jede Hardwarekomponente $a \in A[t]$, einer entsprechenden Entscheidungsvariable $x_{ra}[t] \in \{0, 1\}$, wobei $x_{ra} = 1$, wenn die Rechenaufgabe $r \in R[t]$ der Rechenhardwarekomponente $a \in A[t]$ zugewiesen wird, und andernfalls $x_{ra} = 0$, unter der Nebenbedingung, dass jede Aufgabe $r \in R[t]$ höchstens einer Rechenhardwarekomponente $a \in A[t]$ zuweisbar ist und jeder Rechenhardwarekomponente $a \in A[t]$ höchstens eine Rechenaufgabe $r \in R[t]$ zugewiesen werden soll;
c) zu dem gegebenen Zeitpunkt $t \in T_{act}$, wobei $c_r \in C$ die zugeordnete Aufgabenqualitätsklasse $c$ von $r \in R[t]$, ist, Bestimmen von Entscheidungsvariablendaten $x[t]$ durch Lösen eines Maximierungsproblems, das den zugeordneten Nutzwert $U_{proc}$ von $c_r \in C$ und $a \in A[t]$ für alle $r \in R[t]$ und $a \in A[t]$ einschließt, unter der Bedingung: $\Sigma_{a \in A[t]}\, x_{ra}[t]T_{c_ra} + (1 - \Sigma_{a \in A[t]}\, x_{ra}[t])(D_{c_r} + 1) \le D_{c_r}$, für alle $r \in R[t]$, mit $x[t] \in F[t]$, wobei $F[t]$ der Satz aller Entscheidungsvariablendaten ist, die die Nebenbedingung in Schritt b) zum gegebenen Zeitpunkt $t \in T_{act}$ erfüllen, wobei $T_{c_ra}$ die zugeordnete Verarbeitungszeit $T_{proc}$ von $c_r \in C$ und $a \in A[t]$ ist, und $D_{c_r}$ der zugeordnete Rechenzeitgrenzwert $D_{limit}$ von $c_r \in C$ ist; und
d) zu dem gegebenen Zeitpunkt $t \in T_{act}$, Planen des Satzes $R[t]$ von Rechenaufgaben (14) unter dem Satz $A[t]$ von Rechenhardwarekomponenten (12) basierend auf den bestimmten Entscheidungsvariablendaten $x[t]$.

**2.** Verfahren nach Anspruch 1, **dadurch gekennzeichnet, dass** Schritt c) ferner umfasst:
c1) zu dem gegebenen Zeitpunkt $t \in T_{act}$, Lösen des Maximierungsproblems gemäß:

$$\max_{x[t]} \sum_{r \in R[t]} \sum_{a \in A[t]} x_{ra}[t]U_{c_ra},$$

wobei $U_{c_ra}$ der zugeordnete Nutzwert $U_{proc}$ von $c, \in C$ und $a \in A[t]$ ist.

**3.** Verfahren nach einem der vorhergehenden Ansprüche, **dadurch gekennzeichnet, dass** Schritt c) ferner umfasst:
c2) zu dem gegebenen Zeitpunkt $t \in T_{act}$, Lösen eines bipartiten Matching-Problems.

**4.** Verfahren nach Anspruch 3, **dadurch gekennzeichnet, dass** Schritt c) ferner umfasst:
c3) zu dem gegebenen Zeitpunkt $t \in T_{act}$, Lösen des bipartiten Matching-Problems gemäß:

$$\max_{x[t]} \sum_{r \in R[t]} \sum_{a \in A[t]} x_{ra}[t]\big(U_{c_ra} - V_{c_r}[t]\big[T_{c_ra} - D_{c_r} - 1\big]\big),$$

wobei $U_{cra}$ der zugeordnete Nutzwert $U_{proc}$ von $c_r \in C$ und $a \in A[t]$ ist, $T_{cra}$ die zugeordnete Verarbeitungszeit $T_{proc}$ von $c_r \in C$ und $a \in A[t]$ ist, $D_{cr}$ der zugeordnete Rechenzeitgrenzwert $D_{limit}$ von $c_r \in C$ ist, und $V_{cr}[t]$ eine virtuelle Warteschlangenvariable von $c_r \in C$ in Form von pro $\Delta t$ ist.

5. Verfahren nach Anspruch 4, **dadurch gekennzeichnet, dass** Schritt c) ferner umfasst:
c4) zu dem gegebenen Zeitpunkt $t \in T_{act}$, iteratives Berechnen für jede Klasse $c_r \in C$ der zugeordneten virtuellen Warteschlangenvariablen $V_{cr}[t]$ in Form von pro $\Delta t$ gemäß:

$$V_{c_r}[t] = \max_{x[t]}\left\{ V_{c_r}[t - \Delta t] - \lambda\left( D_{c_r} - \sum_{a \in A[t]} x_{ra}[t - \Delta t]\, T_{c_r a} - \left(1 - \sum_{a \in A[t]} x_{ra}\right)\left(D_{c_r} + 1\right)\right), 0 \right\},$$

wobei $\lambda \geq 0$ einem Abstimmungsparameter der Iteration entspricht.

6. Verfahren nach einem der vorhergehenden Ansprüche, **dadurch gekennzeichnet, dass** der zugeordnete Rechenzeitgrenzwert $D_{limit}$ einer durchschnittlichen Dauer für die Verarbeitung einer beliebigen Rechenaufgabe (14) der entsprechenden Klasse $c \in C$ mittels jeder der Rechenhardwarekomponenten (12) in der Datenverarbeitungsvorrichtung (10) entspricht.

7. Verfahren nach einem der vorhergehenden Ansprüche, **dadurch gekennzeichnet, dass** der zugeordnete Nutzwert $U_{proc}$ einem zugeordneten Prioritätswert $P_{proc}$ entspricht, der eine Priorität angibt, die jede Rechenaufgabe (14) der entsprechenden Klasse $c \in C$ auf der entsprechenden Rechenhardwarekomponente (12) hat, und/oder dass der zugeordnete Nutzwert $U_{proc}$ einem zugeordneten Prioritätswert $P_{proc}$ entspricht, der eine Priorität angibt, die jede Rechenaufgabe (14) der entsprechenden Klasse $c \in C$ auf jeder der Rechenhardwarekomponenten (12) in der Datenverarbeitungsvorrichtung (10) hat.

8. Verfahren nach einem der vorhergehenden Ansprüche, **dadurch gekennzeichnet, dass** jede Rechenaufgabe (14) eine kryptographische Berechnungsfunktion beinhaltet.

9. Aufgabenplanungsvorrichtung (16), umfassend Mittel, die konfiguriert sind, um das Verfahren nach einem der vorhergehenden Ansprüche auszuführen.

10. Datenverarbeitungsvorrichtung (10), umfassend die Aufgabenplanungsvorrichtung (16) nach Anspruch 9 und eine Vielzahl von Rechenhardwarekomponenten (12).

11. Datenverarbeitungsvorrichtung (10) nach Anspruch 10, **dadurch gekennzeichnet, dass** die Vielzahl der Rechenhardwarekomponenten eine oder mehrere einer CPU (28), einer GPU, eines FPGA (30), eines IC (32) und/oder dergleichen umfassen.

12. Datenverarbeitungsvorrichtung (10) nach Anspruch 11, **dadurch gekennzeichnet, dass** mindestens zwei aus der Vielzahl der Rechenhardwarekomponenten (12) für mindestens eine Aufgabenqualitätsklasse $c \in C$ unterschiedliche entsprechende Verarbeitungszeitwerte $T_{proc}$ und/oder unterschiedliche entsprechende Nutzwerte $U_{proc}$ aufweisen.

13. Luftfahrzeug, insbesondere ein Flugzeug (18), umfassend die Aufgabenplanungsvorrichtung (16) nach Anspruch 9 und/oder die Datenverarbeitungsvorrichtung (10) nach Anspruch 10 oder 11.

14. Computerprogramm, umfassend Anweisungen, die bei Ausführung des Programms durch einen Computer den Computer veranlassen, das Verfahren nach einem der Ansprüche 1 bis 8 auszuführen.

15. Computerlesbarer Datenträger, auf dem das Computerprogramm nach Anspruch 14 gespeichert ist.

**Revendications**

1. Procédé de planification de tâches mis en œuvre par ordinateur, destiné à être utilisé dans un dispositif de traitement de données (10) avec une pluralité de composants matériels de calcul (12) et pour planifier un ensemble $R[t]$ de tâches de calcul (14) à un instant donné $t \in T_{act}$, $T_{act}$ étant un ensemble d'intervalles de temps discrets de longueur $\Delta t$ chacun, parmi un ensemble $A[t]$ desdits composants matériels de calcul (12) qui sont disponibles à l'instant donné $t \in T_{act}$ et configurés pour exécuter l'une quelconque des tâches de calcul (14), chaque tâche de calcul (14) étant associée à une classe de qualité de tâche correspondante $c \in C$, $C$ étant un ensemble de classes de qualité de tâche, chaque classe de qualité de tâche $c \in C$ et chaque composant matériel de calcul (12) étant associés à une valeur de temps de traitement correspondante $T_{proc}$ en termes de $\Delta t$, la valeur de temps de traitement associée $T_{proc}$ étant indicative d'une durée pour traiter une tâche de calcul quelconque (14) de la classe correspondante $c \in C$ au moyen du composant matériel de calcul (12) correspondant, chaque classe de qualité de tâche $c \in C$ et chaque composant matériel de calcul (12) étant en outre associés à une valeur d'utilité correspondante $U_{proc}$, la valeur d'utilité associée $U_{proc}$ étant indicative d'un coût ou d'une valeur ajoutée qui est induit par le traitement d'une tâche de calcul quelconque (14) de la classe correspondante $c \in C$ au moyen du composant matériel de calcul (12) correspondant, le procédé comprenant:

  a) l'association de chaque classe de qualité de tâche $c \in C$ à une valeur limite de temps de calcul correspondante $D_{limit}$ en termes de $\Delta t$ ;
  b) à l'instant donné $t \in T_{act}$, la définition pour chaque tâche de calcul $r \in R[t]$ et chaque composant matériel $a \in A[t]$, d'une variable de décision correspondante $x_{ra}[t] \in \{0, 1\}$, où $x_{ra} = 1$ si ladite tâche de calcul $r \in R[t]$ est allouée au composant matériel de calcul $a \in A[t]$, et $x_{ra} = 0$ sinon, sous la contrainte que chaque tâche $r \in R[t]$ est attribuable à au plus un composant matériel de calcul $a \in A[t]$ et que chaque composant matériel de calcul $a \in A[t]$ se voit assigner au plus une tâche de calcul $r \in R[t]$ ;
  c) à l'instant donné $t \in T_{act}$, tandis que $c_r \in C$ est la classe de qualité de tâche associée de $r \in R[t]$, la détermination de données de variables de décision $x[t]$ en résolvant un problème de maximisation incluant la valeur d'utilité associée $U_{proc}$ de $c_r \in C$ et $a \in A[t]$, pour tous $r \in R[t]$ et $a \in A[t]$, sous la condition:

$$\sum_{a \in A[t]} x_{ra}[t] T_{c_r a} + \left(1 - \sum_{a \in A[t]} x_{ra}[t]\right)\left(D_{c_r} + 1\right) \leq D_{c_r}, \text{ pour tous } r \in R[t], \text{ avec } x[t] \in$$

  $F[t]$, $F[t]$ étant l'ensemble de toutes les données de variables de décision satisfaisant la contrainte de l'étape b) à l'instant donné $t \in T_{act}$, $T_{c_r a}$ étant le temps de traitement associé $T_{proc}$ de $c_r \in C$ et $a \in A[t]$, et $D_{c_r}$ étant la valeur limite de temps de calcul associée $D_{limit}$ de $c_r \in C$ ; et
  d) à l'instant donné $t \in T_{act}$, la planification de l'ensemble $R[t]$ de tâches de calcul (14) parmi l'ensemble $A[t]$ de composants matériels de calcul (12) sur la base des données de variables de décision déterminées $x[t]$.

2. Procédé selon la revendication 1, **caractérisé en ce que** l'étape c) comprend en outre:
  c1) à l'instant donné $t \in T_{act}$, la résolution du problème de maximisation selon:

$$\max_{x[t]} \sum_{r \in R[t]} \sum_{a \in A[t]} x_{ra}[t] U_{c_r a},$$

  avec $U_{c_r a}$ étant la valeur d'utilité associée $U_{proc}$ de $c_r \in C$ et $a \in A[t]$.

3. Procédé selon l'une quelconque des revendications précédentes, **caractérisé en ce que** l'étape c) comprend en outre:
  c2) à l'instant donné $t \in T_{act}$, la résolution d'un problème de couplage biparti.

4. Procédé selon la revendication 3, **caractérisé en ce que** l'étape c) comprend en outre:
  c3) à l'instant donné $t \in T_{act}$, la résolution du problème de couplage biparti selon:

$$\max_{x[t]} \sum_{r \in R[t]} \sum_{a \in A[t]} x_{ra}[t]\left(U_{c_r a} - V_{c_r}[t]\left[T_{c_r a} - D_{c_r} - 1\right]\right),$$

  avec $U_{c_r a}$ étant la valeur d'utilité associée $U_{proc}$ de $c_r \in C$ et $a \in A[t]$, $T_{c_r a}$ étant le temps de traitement associé $T_{proc}$ de $c_r \in C$ et $a \in A[t]$, $D_{c_r}$ étant la valeur limite de temps de calcul associée $D_{limit}$ de $c_r \in C$, et $V_{c_r}[t]$ étant une variable de file d'attente virtuelle de $c_r \in C$ en termes de par $\Delta t$.

5. Procédé selon la revendication 4, **caractérisé en ce que** l'étape c) comprend en outre:

c4) à l'instant donné $t \in T_{act}$, le calcul itératif pour chaque classe $c_r \in C$ de la variable de file d'attente virtuelle associée $V_{c_r}[t]$ en termes de par $\Delta t$ selon:

$$V_{c_r}[t] = \max_{x[t]} \left\{ V_{c_r}[t - \Delta t] - \lambda \left( D_{c_r} - \sum_{a \in A[t]} x_{ra}[t - \Delta t]\, T_{c_r a} - \left( 1 - \sum_{a \in A[t]} x_{ra} \right)\left( D_{c_r} + 1 \right) \right), 0 \right\},$$

où $\lambda \geq 0$ correspond à un paramètre de réglage de l'itération.

6. Procédé selon l'une quelconque des revendications précédentes, **caractérisé en ce que** la valeur limite de temps de calcul associée $D_{limit}$ correspond à une durée moyenne pour le traitement d'une tâche de calcul quelconque (14) de la classe correspondante $c \in C$ au moyen de chacun des composants matériels de calcul (12) dans le dispositif de traitement de données (10).

7. Procédé selon l'une quelconque des revendications précédentes, **caractérisé en ce que** la valeur d'utilité associée $U_{proc}$ correspond à une valeur de priorité associée $P_{proc}$ indicative d'une priorité que possède chaque tâche de calcul (14) de la classe correspondante $c \in C$ sur le composant matériel de calcul (12) correspondant et/ou **en ce que** la valeur d'utilité associée $U_{proc}$ correspond à une valeur de priorité associée $P_{proc}$ indicative d'une priorité que possède chaque tâche de calcul (14) de la classe correspondante $c \in C$ sur chacun des composants matériels de calcul (12) dans le dispositif de traitement de données (10).

8. Procédé selon l'une quelconque des revendications précédentes, **caractérisé en ce que** chaque tâche de calcul (14) inclut une fonction de calcul cryptographique.

9. Dispositif de planification de tâches (16) comprenant des moyens configurés pour mettre en œuvre le procédé selon l'une quelconque des revendications précédentes.

10. Dispositif de traitement de données (10), comprenant le dispositif de planification de tâches (16) selon la revendication 9 et une pluralité de composants matériels de calcul (12).

11. Dispositif de traitement de données (10) selon la revendication 10, **caractérisé en ce que** la pluralité de composants matériels de calcul incluent un ou plusieurs parmi un CPU (28), un GPU, un FPGA (30), un IC (32), et/ou similaires.

12. Dispositif de traitement de données (10) selon la revendication 11, **caractérisé en ce qu'** au moins deux de la pluralité de composants matériels de calcul (12) ont, pour au moins une classe de qualité de tâche $c \in C$, des valeurs de temps de traitement correspondantes $T_{proc}$ différentes et/ou des valeurs d'utilité correspondantes $U_{proc}$ différentes.

13. Aéronef, en particulier un aéronef (18), comprenant le dispositif de planification de tâches (16) selon la revendication 9 et/ou le dispositif de traitement de données (10) selon la revendication 10 ou 11.

14. Programme d'ordinateur comprenant des instructions qui, lorsque le programme est exécuté par un ordinateur, amènent l'ordinateur à mettre en œuvre le procédé selon l'une quelconque des revendications 1 à 8.

15. Support de données lisible par ordinateur sur lequel est stocké le programme d'ordinateur selon la revendication 14.

**Fig. 1**

EP 4 411 541 B1

Fig. 3

Fig. 4

Node 1      Node 2

<pk,sk>=keygen()

send pk →

<c,k>=encaps(pk)

← send c

key=decaps(c,sk)      key=K

**Fig. 5**

Node 1      Node 2

<pk,sk>=keygen()
sig=sign(m,sk)

send <m,sig,pk> →

verify(pk,m,sig)

Signature ok/nok

**Fig. 6**

**Fig. 7**

**Fig. 8**

EP 4 411 541 B1

19

**Fig. 2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 2018095571 A